# EUROPÄISCHE PATENTSCHRIFT

(11) **EP 2 378 270 B1**
(45) Veröffentlichungstag und Bekanntmachung des Hinweises auf die Patenterteilung: **24.06.2015**
(21) Anmeldenummer: 10160039.3
(22) Anmeldetag: 15.04.2010
(51) Int. Cl.: G01N 15/06, G01N 21/53, G01N 15/14, G01N 15/00

(54) **Verfahren zur Bestimmung einer Partikelkonzentration und Messvorrichtung**
Method for determining particle concentration and measuring device
Procédé de détermination d'une concentration de particules et dispositif de mesure

(43) Veröffentlichungstag der Anmeldung: 19.10.2011
(73) Patentinhaber: SICK Engineering GmbH, 01458 Ottendorf-Okrilla (DE)
(72) Erfinder: Melcher, Uwe, 01458 Ottendorf-Okrilla (DE)
(74) Vertreter: Ludewigt, Christoph

(56) Entgegenhaltungen:
- EP-A1- 1 729 108
- EP-A2- 1 176 414
- WO-A1-2009/065613
- DE-A1- 4 025 789
- DE-A1- 10 322 577
- DE-U1-202008 014 667

## Beschreibung

Die Erfindung betrifft ein Verfahren zur Bestimmung einer Partikelkonzentration sowie eine Messvorrichtung zur Durchführung des Verfahrens.

Solche Messvorrichtungen dienen beispielsweise zur Bestimmung der Konzentration von Staub- oder Rußpartikeln in industriellen Abgasschornsteinen. Grundsätzlich kommen bei der Bestimmung von Partikelkonzentrationen zwei Messprinzipien zum Einsatz. Einmal die Transmissionsmessung, bei der mittels Durchlichtverfahren die Abschwächung des Sendelichts (Extinktion) gemessen wird und zum anderen die Streulichtmessung, bei der der Anteil des Sendelichts detektiert wird, der von den Partikeln aus der Sendelichtrichtung heraus und in Richtung des Lichtempfängers gestreut wird.

Nachteile der Transmissiometer sind geringe Nullpunktgenauigkeit und schwacher Messeffekt. Deshalb eignet sich die Streulichtmessung insbesondere zur Bestimmung von vergleichsweise geringen Partikelkonzentrationen, wohingegen die Extinktionsmessung für höhere Partikelkonzentrationen geeigneter ist. Des Weiteren reagieren die Transmissiometer auf Grund der quer durch den Gaskanal verlaufenden Messtrecke nicht so empfindlich auf ungleichmäßige Staubverteilung im Kanal. Der Messeffekt bei Transmissiometern ist aber besonders bei kleinen Messstrecken und den heute üblichen, sehr niedrigen Staubkonzentrationen hinter modernen Filtern so schwach, dass die Auflösung und Genauigkeit oft nicht mehr den Ansprüchen genügt. Die Geräte haben meist eine unzureichende Nullpunktstabilität, welche durch eine Anzahl von äußeren Einflüssen wie z.B. Abstandsänderung, optische Dejustage, thermischen Verzug sowie Verschmutzung der optischen Grenzflächen verursacht wird.

Dagegen haben die Streulichtmessgeräte eine deutlich höhere Auflösung und gute Nullpunktgenauigkeit. Die Messung ist aber auf ein relativ kleines Messvolumen beschränkt, welches üblicherweise nahe der Kanalwandung, also quasi nur an einem Punkt der Querschnittsfläche eines Gaskanals liegt. Bei ungleichmäßiger Staubverteilung wird das Messverfahren also eher nicht repräsentative Werte liefern. Trotz dieses Nachteils nimmt die Verbreitung der Streulichtmessgeräte stark zu, weil die Transmissiometer in der klassischen Form eben eine unzureichende Auflösung und Genauigkeit haben.

Aus der DE 10 2005 025 181 A1 ist eine Messvorrichtung bekannt, die jedes der beiden Messverfahren unabhängig vom jeweils anderen Messverfahren in einem Gerät nutzen kann. Die jeweiligen Messwerte der verschiedenen Messverfahren werden unabhängig voneinander ausgegeben. Da entweder das eine oder das andere Messverfahren eingesetzt wird, ist dies für den Nutzer kein größerer Vorteil, weil er sich entscheiden muss, ob er das Messergebnis aus der Transmissionsmessung oder das aus der Streulichtmessung nimmt, wobei die jeweiligen Vor- und Nachteile der einzelnen Messverfahren und dementsprechende Unsicherheiten im Messwert bleiben. Es ist sogar so, dass bei unterschiedlichen Messergebnissen, die auch durch die unterschiedlichen physikalischen Prinzipien der Messverfahren entstehen, Erklärungsnot entsteht, wenn die Messergebnisse voneinander abweichen.

Aus der EP 1 176 414 A2 ist eine Vorrichtung zur Messung von Partikelgrößen in einem Gas bekannt, bei der Streulicht unter verschiedenen Winkeln gemessen wird und aus dem Verhältnis der Messsignale auf die Partikelgröße geschlossen werden kann, da nach der Mie-Theorie eine Abhängigkeit des Streulichtsignals vom Streuwinkel besteht. Um auch große Partikel (> 10µm) bestimmen zu können, ist in einer Ausführungsform auch einen Detektion unter einem Streuwinkel von 0° vorgesehen.

Die WO2009/065613 A1 offenbart wie in einem partikelbeladenen Gasstrom die Fenster für optische Messungen vor Verunreinigungen geschützt werden können. In einer Ausführungsform sind mehrere Empfänger vorgesehen, so dass neben Transmissionsmessungen auch Streulichtmessungen möglich sind.

Aus der DE 40 25 789 A1 ist ein Verfahren zur Bestimmung eines Partikelgehalts in Gasen bekannt, bei dem in spezieller Anordnung von Lichtquellen und Lichtempfängern aus zwei geometrisch gleichwertigen Kombinationen von Streulicht- und Transmissionsmessungen der Gehalt bestimmt wird, indem durch Bildung eines Quotienten zweier Produkte, nämlich dem Produkt der Signalstärken von zwei dieser Streulichtmessungen und dem Produkt der Signalstärken der beiden entsprechenden Transmissionsmessungen, die Fremdeinflüsse berücksichtigt werden können.

Die DE 103 22 577 A1 beschreibt ein Verfahren zur Bestimmung von Absorptions- und Streukoeffizient von Proben, insbesondere Flüssigkeiten, bei dem entweder in Transmission gemessen wird, wenn das Licht die Probe durchdringen kann oder aber das rückgestreute Licht gemessen wird, wenn die Probe optisch so dicht ist, dass das Licht nicht mehr hindurchdringt.

Aus der DE 20 2008 014 667 U1 ist eine Vorrichtung bekannt, um mittels Streulichtmessungen unter verschiedenen Winkeln, Massenkonzentrationen unter Berücksichtigung der Partikelgrößenverteilung bestimmen zu können.

Ausgehend von diesem Stand der Technik ist es Aufgabe der Erfindung ein verbessertes Verfahren und eine verbesserte Messvorrichtung bereitzustellen, mit der die Nachteile des Transmissionsmessprinzips und des Streulichtmessprinzips zu einem gewissen Grad kompensiert werden können, um eine höhere Genauigkeit bei der Partikelkonzentrationsmessung zu erreichen.

Diese Aufgabe wird gelöst durch ein Verfahren mit den Merkmalen des Anspruchs 1 und eine Messvorrichtung mit den Merkmalen des Anspruchs 6.

Das erfindungsgemäße Verfahren umfasst folgende Schritte:
- zu bestimmten Zeitpunkten werden Messwertepaare über einen Zeitraum ermittelt, wobei die Messwertepaare aus je einem Extinktionsmesswert nach dem Prinzip der Transmissionslichtmessung und einem entsprechenden Streulichtmesswert nach dem Prinzip der Streulichtmessung bestehen,
- die Messwertepaare werden gespeichert,
- in einer an den Zeitraum anschließenden Messwertaufbereitungsphase wird mit den gespeicherten Messwertepaaren ein Korrekturwert ermittelt,
- der danach aktuell ermittelte Extinktionsmesswert wird mit dem Korrekturwert korrigiert
- und aus dem so korrigierten Extinktionsmesswert wird die aktuelle Partikelkonzentration bestimmt.

Die wesentliche Erkenntnis besteht darin, jetzt beide Messprinzipien miteinander zu verknüpfen, wodurch die Vorteile des Streulichtmessprinzips für das Messergebnis des Extinktionsmessverfahrens genutzt werden, um am Ende einen Messwert zu erhalten, der eine höhere Genauigkeit aufweist.

Dieser Erkenntnis liegen folgende zwei Postulate zugrunde, die die Erfinder aufgestellt haben:
- Das Transmissionsmessverfahren ist repräsentativer und deshalb höherwertiger, weshalb die Transmission als primäre Messgröße deklariert werden soll.
- Die Streulichtmessung mit z.B. der guten Nullpunktgenauigkeit soll als Hilfsgröße genutzt werden, um z.B. die schlechte Nullpunktstabilität der Transmission zu verbessern.

Mit diesen Postulaten ist der Nutzer bereits von der Entscheidung entlastet, welches Messverfahren er für seine Anwendung priorisieren soll.

Insbesondere in Ländern, die traditionell auf Grund ihrer Gesetzgebung immer noch stark auf das Transmissionsverfahren bzw. daraus abgeleitete Messgrößen fixiert sind, ist die Erfindung mit besonderem Vorteil einsetzbar.

Insgesamt liefert das erfindungsgemäße Verfahren und die erfindungsgemäße Messvorrichtung Messergebnisse für die Partikelkonzentration, die eine höhere Genauigkeit aufweisen als die Einzelergebnisse, die durch Extinktionsmessung oder Streulichtmessung alleine ermittelbar sind, indem nämlich die Einzelergebnisse in der erfindungsgemäßen Weise so miteinander verrechnet werden, dass das Gesamtergebnis besser ist als die Einzelergebnisse.

Darüber hinaus kann die erfindungsgemäße Messvorrichtung nicht nur in der erfindungsgemäßen Weise, sondern auch weiterhin in traditioneller Weise genutzt werden, nämlich für die Extinktionsmessung alleine oder für die Streulichtmessung alleine.

Da das Transmissionsverfahren insbesondere eine schlechte Nullpunktstabilität hat, ist vorteilhafterweise der Korrekturwert eine Nullpunktabweichung, wobei der Korrekturwert aus einer aus den gespeicherten Messwertepaaren erstellten Regressionskennlinie für die Extinktion als Funktion des Streulichts ermittelt wird. Die Nullpunktkorrektur des Transmissionskanals über die Messgröße Streulicht kann auch zur Einsparung einer ansonsten notwendigen Verschmutzungsmessungsvorrichtung verwendet werden, weil Verschmutzungen sich als Nullpunktverschiebung der optischen Messgröße Extinktion auswirken. Somit können z.B. mechanische Schwenkscheiben, die zur Verschmutzungsmessung in den Strahlengang schwenkbar sind, eingespart werden. Auch auf andere Kompensationsverfahren zur Kompensierung einer Verschmutzung kann verzichtet werden.

In Weiterbildung der Erfindung wird die Messwertaufbereitungsphase zyklisch wiederholt, um den Korrekturwert zu aktualisieren. Zwischen den Messwertaufbereitungsphasen, also während des Zeitraumes, in dem die Messdaten erfasst und die Messwertepaare gespeichert werden, wird der zuletzt bestimmte Korrekturwert zur Bestimmung der Partikelkonzentration benutzt, bis in einer erneuten Messwertaufbereitungsphase ein neuer Korrekturwert ermittelt wurde. Damit liegt für die Korrektur immer der aktuellste Korrekturwert vor. In der Praxis werden die Zeiträume, in denen die Messwertepaare erfasst werden und die zur Korrektur herangezogen werden, relativ lang gewählt, damit eine ausreichende statistische Basis für die Korrektur nutzbar ist.

Prinzipiell wäre es auch denkbar, dass, wenn im normalen Betrieb genug Ressourcen in der Korrektureinheit zur Verfügung stehen, die Verarbeitung der Messwerte für einen zurückliegenden Zeitraum auch in Echtzeit erfolgt. Dann würde der Korrekturwert nicht zyklisch, sondern ständig erneuert.

In Weiterbildung der Erfindung können die Extinktionsmesswerte und die Streulichtmesswerte vor dem Speichern vorverarbeitet werden, insbesondere durch Mittelung und/oder Filterung.

Die Messwertaufbereitung ist relativ rechenintensiv und damit zeitaufwändig. Sie würde deshalb relativ leistungsfähige Prozessoren benötigen, wenn man die umfangreiche Messwertaufbereitung in Echtzeit durchführen wollte. Wenn sie aber während periodisch durchgeführter Selbsttests erfolgt, kann diese Zeit, in der das Messgerät sowieso keine Messwerte ausgibt, genutzt werden.

Vorrichtungsgemäß wird die Aufgabe durch eine entsprechende Messvorrichtung zur Durchführung des Verfahrens gelöst. Die erfindungsgemäße Messvorrichtung umfasst einen Lichtsender und mit einen Lichtempfänger, mit dem in einer Extinktionsmessung ein Anteil des durch Partikel gedämpften Sendelichts detektierbar ist und mit einen Lichtempfänger, mit dem in einer Streulichtmessung ein Anteil des Sendelichts detektierbar ist, der an den Partikeln gestreut wurde und eine Auswerteeinheit, die einen Messwertespeicher aufweist, in dem über einen Zeitraum sowohl die ermittelten Extinktionsmesswerte als auch die Streulichtmesswerte als Messwertepaare speicherbar sind und die eine Korrektureinheit aufweist, in der ein Korrekturwert für die Extinktionsmesswerte mittels der gespeicherten Messwertepaare ermittelbar ist und in der die aktuell ermittelten Extinktionsmesswerte mit dem Korrekturwert korrigierbar sind, zur Bestimmung eines Partikelkonzentrationswertes.

Vorteilhafterweise weist die Korrektureinheit Mittel zum Ermitteln einer Nullpunktabweichung auf, die aus einer Regressionskennlinie für die Extinktion als Funktion des Streulichts ermittelbar ist und diese Nullpunktabweichung bildet den Korrekturwert.

Im Folgenden wird die Erfindung anhand eines Ausführungsbeispiels unter Bezugnahme auf die Zeichnung im Einzelnen erläutert. In der Zeichnung zeigen:
- Fig. 1a und 1b: eine erfindungsgemäße Messvorrichtung;
- Fig. 2: ein Diagramm zur Veranschaulichung eines typischen Verlaufs des Extinktionsmesswertes und des Streulichtmesswertes über der Zeit;

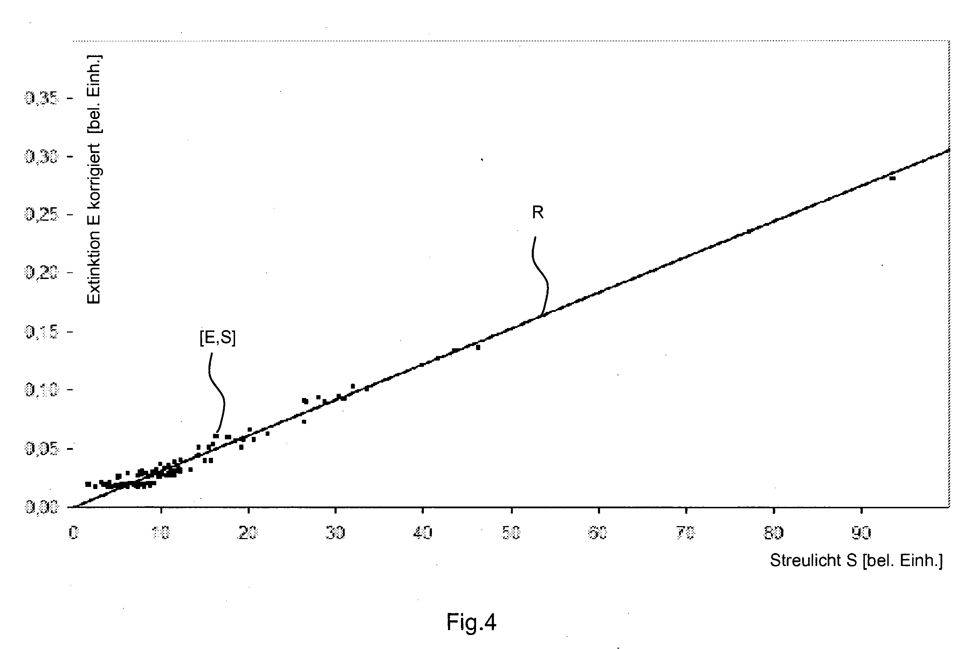

- Fig. 3 und 4: jeweils ein Diagramm, in dem die Extinktion als Funktion des Streulichts aufgetragen ist, mit und ohne Nullpunktkorrektur.

Eine erfindungsgemäße Messvorrichtung 10 ist bezüglich ihrer Hardware in der DE 102005025181 A1 im Detail beschrieben. Sie weist eine Sende-Empfangseinheit 12 und eine Reflektor/Streulichtempfängereinheit 14 auf, die auf gegenüberliegenden Seiten eines industriellen Abgasschornsteines 16 angeordnet sind, derart dass Sendelichtstrahlen der Sende-Empfangseinheit 12 den Schornstein 16 durchsetzen und auf die Reflektor/Streulichtempfängereinheit 14 treffen.

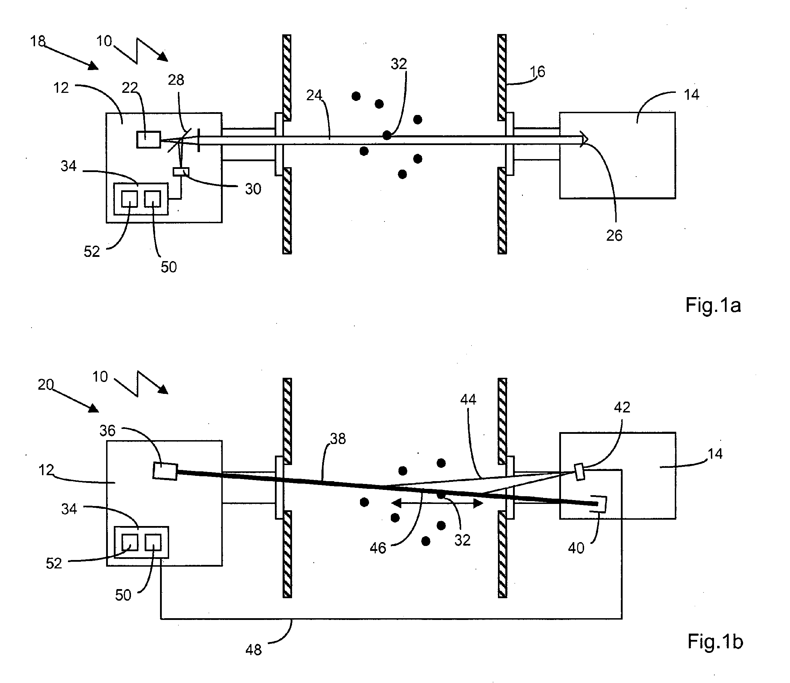

Die Messvorrichtung 10 umfasst dabei ein Transmissiometer 18, das in Fig. 1a schematisch dargestellt ist und ein Streulichtmessgerät 20, dass in Fig. 1b dargestellt ist. Trotz der getrennten Darstellung in diesen beiden Figuren sind beide Geräte 18 und 20 Teil der erfindungsgemäßen Messvorrichtung 10, so dass in diesem Ausführungsbeispiel beide Geräte in der einen Sende-Empfangseinheit 12 und der einen Reflektor/Streulichtempfängereinheit 14 integriert sind.

Das Transmissiometer 18 weist einen ersten Lichtsender 22 auf, vorzugsweise eine LED mit einer Sendeoptik, dessen Sendelichtstrahl 24 den Schornstein 16 durchleuchtet, auf einen Reflektor 26 der Reflektor/Streulichtempfängereinheit 14 trifft, von dort in sich selber zurückreflektiert wird, in der Sende-Empfangseinheit 12 auf einen Teilerspiegel 28 trifft und von diesem auf einen ersten Lichtempfänger 30 gelenkt wird. Mit dem Empfänger 30 kann somit eine Abschwächung des Sendelichts 24 (Extinktion) durch Partikel 32 in dem Schornstein 16 gemessen werden, wozu die dem empfangenen Licht entsprechenden Empfangssignale des Lichtempfängers 30 in einer Auswerteeinheit 34 ausgewertet werden. Auf diese Weise werden Extinktionsmesswerte erhalten, aus denen wiederum eine Partikelkonzentration ermittelbar ist.

Das Streulichtmessgerät 20 weist einen zweiten Lichtsender 36 auf, vorzugsweise einen Laser, dessen Sendelicht 38 ebenfalls den Schornstein 16 durchsetzt und in der Reflektor/Streulichtempfängereinheit 14 von einem Absorber 40 absorbiert wird. In der Reflektor/Streulichtempfängereinheit 14 ist ein zweiter Lichtempfänger 42 angeordnet, dessen Empfangslichtkeule 44 sich mit dem Sendelichtstrahl 38 in einem Messvolumen 46 kreuzt, so dass der zweite Lichtempfänger 42 etwaiges Streulicht der Partikel 32, das in Richtung des Lichtempfängers 42 hin gestreut wird, aufnehmen kann. Die entsprechenden Empfangssignale werden über eine Leitung 48 der Auswerteeinheit 34 zugeführt, so dass in der Auswerteeinheit 34 Streulichtmesswerte zur Verfügung stehen.

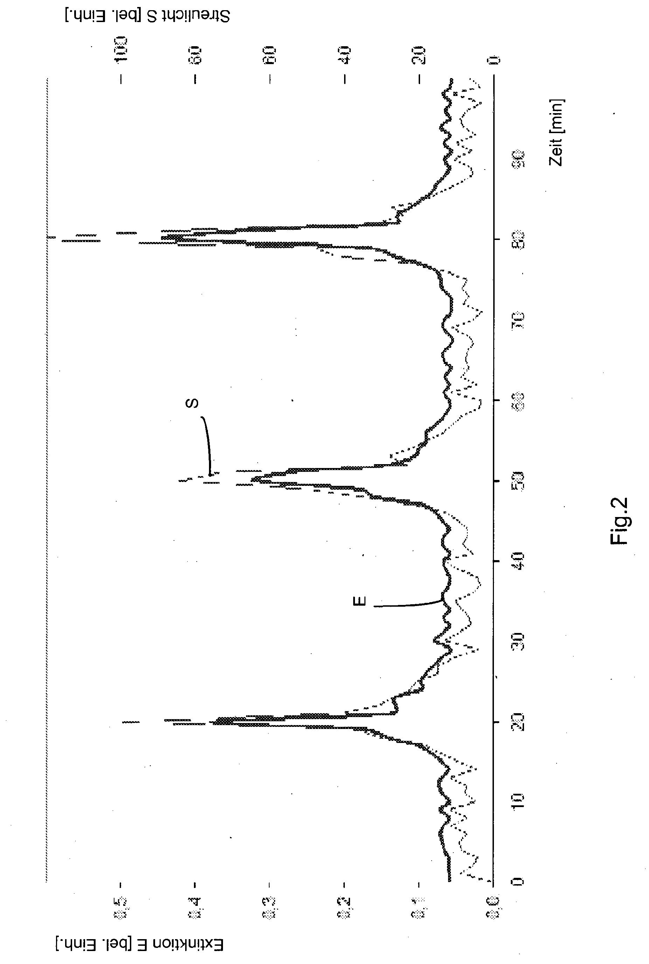

Die Fig. 2 zeigt typische Signalverläufe des Extinktionsmesswertes E und des Streulichtmesswertes S an einem industriellen Abgasschornstein über einen bestimmten Zeitraum. Die regelmäßigen Spitzenwerte sind üblicherweise durch Reinigungszyklen der Staubfilter, die in einem solchen Schornstein vorgesehen sind, verursacht.

Die Auswerteeinheit 34 weist einen Messwertespeicher 50 auf, in den die ermittelten Extinktionsmesswerte und die ermittelten Streulichtmesswerte speicherbar sind, sowie eine Korrektureinheit 52. Die Funktionen des Messwertespeichers 50 und der Korrektureinheit 52 werden im Folgenden im Detail beschrieben, wenn das erfindungsgemäße Verfahren beschrieben wird.

Das erfindungsgemäße Verfahren läuft wie folgt ab:
Zunächst werden über einen größeren Zeitraum, beispielsweise über acht Stunden, zu einzelnen Zeitpunkten jeweils ein Messwertepaar [E,S] aufgenommen,
wobei ein Messwertepaar aus je einem Extinktionsmesswert E und einem Streulichtmesswert S besteht. Auf diese Weise werden eine Vielzahl von Messwertepaaren [E,S] erhalten. Diese Messwertepaare werden in dem Messwertespeicher 50 gespeichert. An diesen Zeitraum schließt sich dann eine Messwertaufbereitungsphase an, in der mit den gespeicherten Messwertepaaren in der Korrektureinheit 52 ein Korrekturwert ermittelt wird, wie im Folgenden beschrieben.

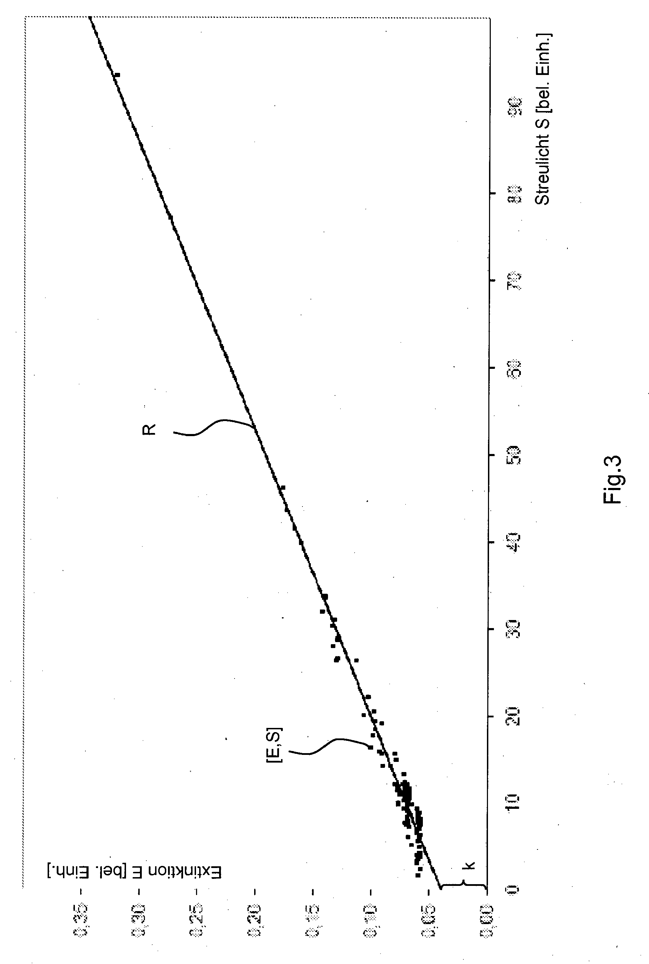

Es wird eine Regressionskennlinie R für die Extinktion E als Funktion des Streulichts S errechnet, wie dies in Fig. 3 grafisch dargestellt ist. Fig. 3 zeigt die Extinktion E als Funktion des Streulichts S, also die gespeicherten Messwertepaare als Punkte in diesem Diagramm. Durch mathematische Aufbereitung der Messwertepaare [E,S] wird eine Regressionskennlinie R gefunden und ein Korrekturwert k, der der Abweichung vom Nullpunkt entspricht, bestimmt.

Der Ermittlung des Korrekturwertes k auf diese Art und Weise liegen folgende physikalischen Betrachtungen zugrunde:
a) Die von der optischen Messgröße "Transmission" abgeleitete Extinktion verhält sich bei stationären Staubeigenschaften linear zur Konzentration und linear zur Absorptionsstrecke.
b) Die optische Messgröße "Streulicht" verhält sich bei stationären Staubeigenschaften ebenfalls linear zur Konzentration.
c) Jede Staubmessung hat im Messsignal eine gewisse Dynamik. Diese entsteht z.B. auch dadurch, dass bei Reinigung von Filtern eine erhöhte Staubbeladung verursacht wird. Aber auch natürliches Rauschen und Schwankungen durch Lastwechsel und sonstige Prozesseinflüsse treten auf.
d) Wenn im Gaskanal kein Staub mehr ist, also eine sogenannte "rauchfreie Messstrecke" im Gaskanal vorliegt, dann zeigt das Streulichtmessverfahren Null an. Es gibt dann auch keine Einflüsse mehr durch ungleichmäßige Staubverteilung im Gaskanal.

Die Ermittlung des Korrekturwertes k über eine Regressionskennlinie und die Definition des Korrekturwertes k als Nullpunktabweichung hat somit Berechtigung.

Dann wird dieser Korrekturwert k, also der Nullpunktfehler der Extinktion, nach der Messwertaufbereitungsphase im weiteren Verlauf der Messung als Kompensation für die Extinktion benutzt. Also wird zur endgültigen Bestimmung der Partikelkonzentration der aktuelle Extinktionsmesswert genommen und der Nullpunktfehler mit dem Korrekturwert k kompensiert. Aus diesem korrigierten Extinktionswert wird dann die Partikelkonzentration bestimmt und an einer geeigneten Anzeige angezeigt. Dieser Korrekturwert k wird für die Ermittlung der Partikelkonzentration so lange benutzt, bis der Korrekturwert k aktualisiert wurde.

Die Aktualisierung des Korrekturwertes k erfolgt zyklisch. Dazu wird der aktuell gültige Korrekturwert k für die Ermittlung der Partikelkonzentration über den auf die vergangene Messwertaufbereitungsphase folgenden nächsten Zeitraum bis zur nächsten Messwertaufbereitungsphase benutzt. In der dann wiederholt durchgeführten Messwertaufbereitungsphase mit den neu aufgenommen und neu abgespeicherten Messwertpaaren wird ein neuer Korrekturwert in gleicher Weise mit neuen Messwertepaaren bestimmt und dieser aktuelle Korrekturwert dann für die weitere Bestimmung der Partikelkonzentration benutzt bis zur einer erneuten Messwertaufbereitungsphase.

In einer Weiterbildung, die sehr praxisrelevant ist, werden die zyklisch ermittelten Korrekturwerte auf Plausibilität gefiltert und gegebenenfalls auch gewichtet in die Korrektur eingeführt, um einmalige Störungen weitgehend eliminieren zu können. So kann z.B. ein neuer Korrekturwert sich aus den beiden letzten Korrekturwerten in einem bestimmten Gewichtsverhältnis zusammensetzen, z.B. zu 20% aus dem aus der vorletzten Messaufbereitungsphase ermittelten Korrekturwert und zu 80 % aus dem aus der letzten Messaufbereitungsphase ermittelten Korrekturwert.

## Patentansprüche

1. Verfahren zur Bestimmung einer Partikelkonzentration, bei dem
- zu bestimmten Zeitpunkten Messwertepaare über einen Zeitraum ermittelt werden, wobei die Messwertepaare aus je einem Extinktionsmesswert nach dem Prinzip der Transmissionslichtmessung und einem entsprechenden Streulichtmesswert nach dem Prinzip der Streulichtmessung bestehen,
- die Messwertepaare gespeichert werden,
- in einer an den Zeitraum anschließenden Messwertaufbereitungsphase mit den gespeicherten Messwertepaaren ein Korrekturwert aus einer aus den gespeicherten Messwertepaaren erstellten Regressionskennlinie für die Extinktion als Funktion des Streulichts ermittelt wird,
- der danach aktuell ermittelte Extinktionsmesswert mit dem Korrekturwert korrigiert wird, der aus einem Nullpunktfehler der Regressionskennlinie bestimmt wird
- und aus dem so korrigierten Extinktionsmesswert die aktuelle Partikelkonzentration bestimmt wird.

2. Verfahren nach einem der vorhergehenden Ansprüche, **dadurch gekennzeichnet, dass** die Messwertaufbereitungsphase zyklisch wiederholt wird zur Aktualisierung des Korrekturwertes und während des Zeitraumes der zuletzt bestimmte Korrekturwert zur Bestimmung der Partikelkonzentration benutzt wird, bis in einer erneuten Messwertaufbereitungsphase ein neuer Korrekturwert ermittelt wurde.

3. Verfahren nach einem der vorhergehenden Ansprüche, **dadurch gekennzeichnet, dass** die Extinktionsmesswerte und die Streulichtmesswerte vor dem Speichern vorverarbeitet werden, insbesondere durch Mittelung und/oder Filterung.

4. Verfahren nach einem der vorhergehenden Ansprüche, **dadurch gekennzeichnet, dass** die Messwertaufbereitung während periodisch durchgeführter Selbsttests erfolgt.

5. Messvorrichtung zur Bestimmung der Partikelkonzentration innerhalb eines Messvolumens nach dem Prinzip der Transmissionslichtmessung mit einem Lichtsender und mit einem Lichtempfänger, mit dem in einer Extinktionsmessung ein Anteil des durch Partikel gedämpften Sendelichts detektierbar ist und mit einem Lichtempfänger, mit dem in einer Streulichtmessung ein Anteil des Sendelichts detektierbar ist, der an den Partikeln gestreut wurde und mit einer Auswerteeinheit, die derart ausgestaltet ist, dass in einem Messwertespeicher der Auswerteeinheit über einen Zeitraum sowohl die ermittelten Extinktionsmesswerte als auch die Streulichtmesswerte als Messwertepaare speicherbar sind und weiter ausgestaltet ist, dass in einer Korrektureinheit der Auswerteeinheit ein Korrekturwert für die Extinktionsmesswerte mittels der gespeicherten Messwertepaare ermittelbar ist, der aus einer aus den gespeicherten Messwertepaaren erstellten Regressionskennlinie für die Extinktion als Funktion des Streulichts ermittelt wird, wobei der Korreturwert aus dem Nullpunktfehler der Regressionskennlinie bestimmt wird und in der Korrektureinheit die aktuell ermittelten Extinktionsmesswerte mit dem Korrekturwert korrigierbar sind und die Auswerteeinheit weiter dazu ausgebildet ist, aus einem so korrigierten Extinktionswert einen aktuellen Partikelkonzentrationswert zu bestimmen.

6. Messvorrichtung nach Anspruch 5, **dadurch gekennzeichnet, dass** die Korrektureinheit Mittel aufweist zum Ermitteln eines Nullpunktkorrekturwerts, der aus einer Regressionskennlinie für die Extinktion als Funktion des Streulichts ermittelbar ist und dieser Nullpunktkorrekturwert den Korrekturwert bildet.

## Claims

1. A method of determining a particle concentration, wherein
- measured value pairs are determined at specific times over a time period, with the measured value pairs each comprising a measured extinction value in accordance with the principle of transmitted light measurement and a corresponding measured scattered light value in accordance with the principle of scattered light measurement;
- the measured values are stored;
- a correction value is determined from a regression characteristic for the extinction as a function prepared from the stored measured value pairs of the scattered light using the stored measured value pairs in a measured value preparation phase subsequent to the time period;
- the measured extinction value then currently determined is corrected using the correction value which is determined from a zero point deviation of the regression characteristic;
- and the current particle concentration is determined from the thus corrected measured extinction value.

2. A method in accordance with one of the preceding claims, **characterized in that** the measured value preparation phase is repeated cyclically for updating the correction value and the last determined correction value is used for determining the particle concentration during the time period until a new correction value is determined in a new measured value preparation phase.

3. A method in accordance with any one of the preceding claims, **characterized in that** the measured extinction values and the measured scattered light values are preprocessed before the storing, in particular by averaging and/or filtering.

4. A method in accordance with any one of the preceding claims, **characterized in that** the measured value preparation takes place during periodically carried out self-tests.

5. A measuring apparatus for determining the particle concentration within a measurement volume in accordance with the principle of transmitted light measurement having a light transmitter and having a light receiver with which a portion of the transmitted light attenuated by particles can be detected in an extinction measurement and having a light receiver with which a portion of the transmitted light can be detected in a scattered light measurement, said portion having been scattered at the particles, and having an evaluation unit which is configured such that both the determined measured extinction values and the measured scattered light values can be stored over a time period as measured value pairs in a measured value memory of the evaluation unit and which is further configured such that a correction value for the measured extinction values can be determined by means of the stored measured value pairs in a correction unit of the evaluation unit and is determined from a regression characteristic for the extinction as a function of the scattered light prepared from the stored measured value pairs, wherein the correction value is determined from the zero point deviation of the regression characteristic and the currently determined measured extinction values can be corrected using the correction value in the correction unit and the evaluation unit is further configured to determine a current particle concentration value from a thus corrected extinction value.

6. A measuring apparatus in accordance with claim 5, **characterized in that** the correction unit has means for determining a zero point correction value which can be determined from a regression characteristic for the extinction as a function of the scattered light and this zero point correction forms the correction value.

## Revendications

1. Procédé pour déterminer une concentration en particules, dans lequel
- on détermine à des instants déterminés des paires de valeurs de mesure sur une période, de sorte que les paires de valeurs de mesure sont constituées respectivement d'une valeur de mesure d'extinction selon le principe de la mesure de lumière par transmission et d'une valeur de mesure de lumière diffuse correspondante selon le principe de la mesure de lumière diffuse,
- on mémorise les paires de valeurs de mesure,
- dans une phase de traitement de valeurs de mesure à la suite de ladite période, on détermine avec les paires de valeurs de mesure mémorisées une valeur de correction à partir d'une ligne caractéristique de régression établie à partir des paires de valeurs de mesure mémorisées pour l'extinction en tant que fonction de la lumière diffuse,
- la valeur de mesure d'extinction déterminée ensuite de façon actuelle est corrigée avec la valeur de correction, qui est déterminée à partir d'une erreur de point zéro de la ligne caractéristique de régression,
- et on détermine à partir de la valeur de mesure d'extinction ainsi corrigée la concentration actuelle en particules.

2. Procédé selon la revendication précédente, **caractérisé en ce que** la phase de traitement de valeurs de mesure est répétée de façon cyclique pour actualiser la valeur de correction et, pendant la période, la valeur de correction déterminée en dernier lieu est utilisée pour la détermination de la concentration en particules, jusqu'à ce qu'une nouvelle valeur de correction soit déterminée dans une nouvelle phase de traitement de valeurs de mesure.

3. Procédé selon l'une des revendications précédentes, **caractérisé en ce que** les valeurs de mesure d'extinction et les valeurs de mesure de lumière diffuse sont prétraitées avant d'être mémorisées, en particulier par calcul de moyenne et/ou par filtrage.

4. Procédé selon l'une des revendications précédentes, **caractérisé en ce que** la préparation des valeurs de mesure a lieu pendant des autotests effectués périodiquement.

5. Dispositif de mesure pour la détermination de la concentration en particules à l'intérieur d'un volume de mesure selon le principe de la mesure de lumière en transmission avec un émetteur de lumière et avec un récepteur de lumière, au moyen duquel, dans une mesure par extinction, il est possible de détecter une part de la lumière émise amortie par des particules, et comprenant un récepteur de lumière au moyen duquel, dans une mesure de lumière diffuse, il est possible de détecter une part de la lumière émise qui est diffusée au niveau des particules, et comprenant une unité d'évaluation qui est conçue de telle façon que, dans une mémoire de valeurs de mesure de l'unité d'évaluation, sur une période donnée, il est possible de mémoriser aussi bien les valeurs de mesure par extinction déterminées que les valeurs de mesures de lumière diffuse, sous forme de paires de valeurs de mesure et qui est en outre conçu de telle façon que, dans une unité de correction de l'unité d'évaluation, une valeur de correction pour les valeurs de mesure par extinction est susceptible d'être déterminée au moyen des paires de valeurs de mesure mémorisées, ladite valeur de correction étant déterminée à partir d'une ligne caractéristique de régression établie à partir des paires de valeurs de mesure mémorisées pour l'extinction en fonction de la lumière diffuse, et dans lequel la valeur de correction est déterminée à partir de l'erreur au point zéro de la ligne caractéristique de régression et, dans l'unité de correction, les valeurs de mesure par extinction actuellement déterminées sont susceptibles d'être corrigées avec la valeur de correction, et l'unité d'évaluation est en outre réalisée pour déterminer, à partir d'une valeur d'extinction ainsi corrigée, une valeur actuelle de concentration en particules.

6. Dispositif de mesure selon la revendication 5, **caractérisé en ce que** l'unité de correction comprend des moyens pour déterminer une valeur de correction au point zéro, qui est susceptible d'être déterminée à partir d'une ligne caractéristique de régression pour l'extinction en fonction de la lumière diffuse, et cette valeur de correction au point zéro forme la valeur de correction.
